# EUROPÄISCHE PATENTANMELDUNG

(11) **EP 1 484 358 A1**
(43) Veröffentlichungstag der Anmeldung: **08.12.2004**
(21) Anmeldenummer: 04011197.3
(22) Anmeldetag: 11.05.2004
(51) Int. Cl.: C08J 9/32, C09D 7/12, B60R 13/02, C08J 9/00, B29C 44/18

(54) **Schichtbauteil für ein Kraftfahrzeug, mit einer Kunststoffschicht enthaltend schrumpffreie Verdrängungskörper**

(30) Priorität: 03.06.2003 DE 10325096
(71) Anmelder: ArvinMeritor GmbH, 63128 Dietzenbach (DE)
(72) Erfinder: Ludwig, Matthias, 38159 Vechelde (DE); Lutz, Marcus, 38518 Gifhorn (DE); Niebuhr, Frank, 38518 Wilsche (DE); Niesner, Tobias, 38518 Gifhorn (DE); Batke, Harald, 38539 Gerstenbüttel (DE)
(74) Vertreter: Sties, Jochen, Dipl.-Ing.

(57) **Zusammenfassung**

Ein Schichtbauteil (10), insbesondere Karosserieteil für ein Kraftfahrzeug, mit einem Substrat (12) und einer Kunststoffschicht (14), die mit dem Substrat fest verbunden ist, ist dadurch gekennzeichnet, daß in die Kunststoffschicht schrumpfungsfreie Verdrängungskörper (16) eingebettet sind.

## Beschreibung

Die Erfindung betrifft ein Schichtbauteil, insbesondere ein Karosserieteil für ein Kraftfahrzeug, mit einem Substrat und einer Kunststoffschicht, die mit dem Substrat fest verbunden ist.

Ein solches Schichtbauteil kann beispielsweise ein Dachmodul für ein Kraftfahrzeug sein, bei dem als Substrat eine Folie aus thermoplastischem Kunststoff oder Aluminium und als Kunststoffschicht eine Schicht aus Polyurethan verwendet wird. Das Polyurethan wird in flüssigem Zustand mit Glasfasern versetzt und auf das Substrat aufgebracht. Das Substrat mit dem flüssigen Polyurethan wird in eine Schäumform eingebracht, in der das Polyurethan expandiert und sich verfestigt. Auf diese Weise wird ein Kompositbauteil erhalten, das eine hohe Festigkeit bei vergleichsweise geringem Gewicht hat.

Beim Aushärten des Polyurethans wird bekanntermaßen Wärme freigesetzt. Je dicker die Kunststoffschicht ist, desto mehr Wärme fällt lokal an. Daraus resultieren Temperaturunterschiede zu Bereichen des Schichtbauteils, in welchen die Kunststoffschicht dünner ist und daher entsprechend weniger Wärme anfällt. Hieraus resultiert eine unterschiedliche Materialschrumpfung beim Abkühlen des Schichtbauteils, was zu eingefallenen bzw. eingezogenen Materialstellen führt. Diese Stellen können als Oberflächendefekte auf der von der Kunststoffschicht abgewandten Außenseite des Substrats sichtbar sein, insbesondere wenn als Substrat eine vergleichsweise dünne Folie verwendet wird.

Die Aufgabe der Erfindung besteht darin, die beschriebenen Oberflächendefekte bei einem Schichtbauteil zu vermeiden.

Zu diesem Zweck ist erfindungsgemäß bei einem Schichtbauteil der eingangs genannten Art vorgesehen, daß in die Kunststoffschicht schrumpfungsfreie bzw. schrumpfungsarme Verdrängungskörper eingebettet sind. Die Erfindung beruht auf dem Grundgedanken, in der Kunststoffschicht weniger Material zu verwenden, welches schrumpft. Dadurch verringern sich die schrumpfungsbedingten Oberflächendefekte. Im Idealzustand stellen sich die Verdrängungskörper als gewichtsfreie, temperaturfeste, mechanisch stabile Körper mit definiertem Volumen dar, die sich gut in das Kunststoffmaterial einbetten lassen.

Vorzugsweise ist vorgesehen, daß das spezifische Gewicht der Verdrängungskörper geringer ist als das spezifische Gewicht der Kunststoffschicht. Auf diese Weise ergibt sich gleichzeitig ein geringeres Gesamtgewicht des Schichtbauteils, was sehr erwünscht ist.

Gemäß der bevorzugten Ausführungsform der Erfindung ist vorgesehen, daß die Verdrängungskörper ungleichmäßig in der Kunststoffschicht verteilt sind. Insbesondere ist der Anteil an Verdrängungskörpern in dickeren Bereichen der Kunststoffschicht höher als in dünneren Bereichen. Diese vorteilhafte Verteilung der Verdrängungskörper beruht auf zwei Überlegungen. Zum einen sind die schrumpfungsbedingten Probleme um so größer, je mehr Material schrumpft, also je dicker die Kunststoffschicht ist. Aus diesem Grunde ist es vorteilhaft, in dickeren Bereichen mehr Verdrängungskörper zu verwenden. Zum anderen ist es vorteilhaft, daß in dünneren Bereichen der Kunststoffschicht, also in Bereichen mit geringerer Festigkeit aufgrund des geringeren Materialquerschnitts, weniger Verdrängungskörper vorhanden sind, da diese tendenziell zu einer weiteren Schwächung der Kunststoffschicht führen. Diese Schwächung ist in den dickeren Bereichen jedoch hinnehmbar, da aufgrund des höheren Materialquerschnitts dort die Festigkeit entsprechend höher ist.

Die Verdrängungskörper bestehen vorzugsweise aus Kunststoff. Beispielsweise können sie innen hohl sein oder geschäumt sein. Besonders bevorzugt ist, daß die Verdrängungskörper eine geschlossene Oberfläche haben, damit das Material der Kunststoffschicht nicht in die Verdrängungskörper eindringt. Schließlich müssen die Verdrängungskörper aus einem temperaturstabilen Material bestehen, so daß sie bei der Verarbeitung, insbesondere beim Aushärten des Kunststoffmaterials, nicht mit diesem reagieren. Die Verdrängungskörper können beispielsweise auf PUR-Recyclingmaterial bestehen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen, abgebrochenen Querschnittsansicht ein erfindungsgemäßes Schichtbauteil; und
- Figur 2 in einer schematischen Ansicht eine Vorrichtung zur Herstellung des erfindungsgemäßen Schichtbauteils.

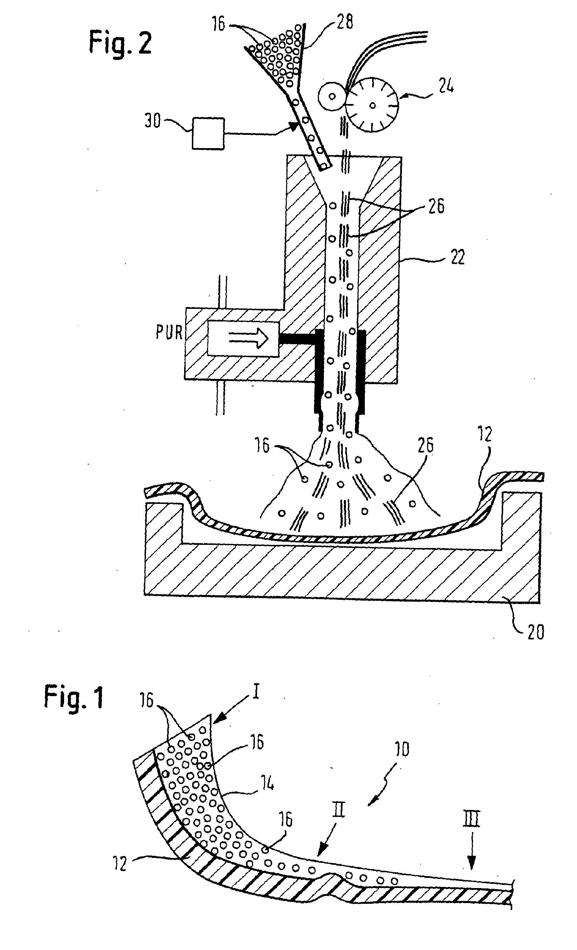

In Figur 1 ist schematisch ein Schichtbäuteil 10 gezeigt, das aus einem Substrat 12 und einer darauf aufgebrachten Kunststoffschicht 14 besteht. Das Substrat 12 ist eine Folie aus thermoplastischem Kunststoff, und die Kunststoffschicht 14 ist ein geschäumtes Kunststoffmaterial wie Polyurethan. Die Kunststoffschicht 14 ist faserverstärkt, da sie mit (nicht dargestellten) Glasfasern versehen ist.

In der Kunststoffschicht 14 sind viele kleine Verdrängungskörper 16 eingebettet, die aus Kunststoff bestehen und eine geschlossene Oberfläche haben. Von besonderer Bedeutung ist, daß die Verdrängungskörper 16 in der Kunststoffschicht 14 nicht homogen verteilt sind, sondern daß ihr Anteil mit der jeweiligen Dicke der Kunststoffschicht 14 korreliert. In einem mit I bezeichneten Bereich der Kunststoffschicht 16, in welchem die Kunststoffschicht eine hohe Dicke hat, ist der Anteil der Verdrängungskörper 16 hoch. In einem mit II bezeichneten Bereich der Kunststoffschicht, in welchem diese eine mittlere Dicke hat, ist der Anteil der Verdrängungskörper 16 geringer als in dem mit I bezeichneten Bereich. In einem mit III bezeichneten Bereich, in welchem die Kunststoffschicht die geringste Dicke hat, sind schließlich gar keine Verdrängungskörper 16 vorhanden.

Anhand von Figur 2 wird nun die Herstellung des in Figur 1 gezeigten Schichtbauteils 10 beschrieben.

Zur Herstellung wird ein Rohling des Substrats 12 in ein Unterteil 20 einer Schäumform eingelegt. Auf das Substrat 12 wird das flüssige Polyurethan mittels eines Mischkopfes 22 aufgebracht. Dieser ist relativ zum Unterteil 20 der Schäumform verfahrbar, so daß das flüssige Polyurethan auf dem Substrat 12 verteilt werden kann. Oberhalb des Mischkopfes 22 ist ein Schneidwerkzeug 24 vorgesehen, mit dem Glasfasern 26 in der jeweils gewünschten Länge abgeschnitten werden können. Schließlich sind ein Vorratsbehälter 28 für die Verdrängungskörper 16 sowie eine Zumeßeinrichtung 30 für die Verdrängungskörper 16 vorgesehen.

Das flüssige Polyurethan wird auf das Substrat 12 aufgebracht, indem der Mischkopf 22 über den Substrat 12 verfahren wird. In Abhängigkeit von der jeweiligen Position des Mischkopfes 22 und damit in Abhängigkeit von der Dicke der vom Polyurethan später gebildeten Kunststoffschicht 14 führt die Zumeßeinrichtung 30 dem Mischkopf 22 mehr oder weniger Verdrängungskörper 16 zu.

Nachdem das flüssige Polyurethan auf das Substrat 12 aufgebracht ist, wird die Schäumform geschlossen, und das Polyurethan reagiert und härtet aus. Da die Verdrängungskörper 16 beim Aushärten des Polyurethans selbst nicht schrumpfen, verringern sich die Schrumpfungseffekte entsprechend dem Anteil der Verdrängungskörper im Polyurethan.

## Patentansprüche

1. Schichtbauteil (10), insbesondere Karosserieteil für ein Kraftfahrzeug, mit einem Substrat (12) und einer Kunststoffschicht (14), die mit dem Substrat fest verbunden ist, **dadurch gekennzeichnet, daß** in die Kunststoffschicht schrumpfungsfreie Verdrängungskörper (16) eingebettet sind.

2. Schichtbauteil nach Anspruch 1, **dadurch gekennzeichnet, daß** das spezifische Gewicht der Verdrängungskörper (16) geringer ist als das spezifische Gewicht der Kunststoffschicht.

3. Schichtbauteil nach Anspruch 1 oder Anspruch 2, **dadurch gekennzeichnet, daß** die Verdrängungskörper (16) ungleichmäßig in der Kunststoffschicht (14) verteilt sind.

4. Schichtbauteil nach Anspruch 3, **dadurch gekennzeichnet, daß** die Kunststoffschicht (14) Bereiche mit unterschiedlicher Dicke hat und daß der Anteil an Verdrängungskörpern (16) in dickeren Bereichen der Kunststoffschicht höher ist als in dünneren Bereichen.

5. Schichtbauteil nach einem der vorhergehenden Ansprüche, **dadurch gekennzeichnet, daß** das Substrat (12) eine Folie aus thermoplastischem Kunststoff ist.

6. Schichtbauteil nach einem der Ansprüche 1 bis 4, **dadurch gekennzeichnet, daß** das Substrat (12) eine Folie aus Aluminium bzw. einer Aluminiumlegierung ist.

7. Schichtbauteil nach einem der vorhergehenden Ansprüche, **dadurch gekennzeichnet, daß** die Kunststoffschicht (14) aus einem geschäumten Material besteht.

8. Schichtbauteil nach einem der vorhergehenden Ansprüche, **dadurch gekennzeichnet, daß** die Kunststoffschicht (14) aus Polyurethan besteht.

9. Schichtbauteil nach einem der vorhergehenden Ansprüche, **dadurch gekennzeichnet, daß** die Verdrängungskörper (16) aus Kunststoff bestehen.

10. Schichtbauteil nach einem der vorhergehenden Ansprüche, **dadurch gekennzeichnet, daß** die Verdrängungskörper (16) hohl sind.

11. Schichtbauteil nach einem der vorhergehenden Ansprüche, **dadurch gekennzeichnet, daß** die Verdrängungskörper (16) geschäumt sind.

12. Schichtbauteil nach einem der vorhergehenden Ansprüche, **dadurch gekennzeichnet, daß** die Verdrängungskörper (16) eine geschlossene Oberfläche haben.

13. Schichtbauteil nach einem der vorhergehenden Ansprüche, **dadurch gekennzeichnet, daß** die Verdrängungskörper (16) temperaturstabil sind.
